# EUROPEAN PATENT SPECIFICATION

(11) **EP 0 660 490 B1**
(45) Date of publication and mention of the grant of the patent: **03.12.1997**
(21) Application number: 93310387.1
(22) Date of filing: 21.12.1993
(51) Int. Cl.: H02K 1/27, H02K 15/03, H02K 1/30

(54) **A rotor provided with a ring-shaped magnet**
Rotor mit ringförmigem Magnet
Rotor avec aimant en forme d'anneau

(43) Date of publication of application: 28.06.1995
(73) Proprietor: DAIDO TOKUSHUKO KABUSHIKI KAISHA, Naka-ku Nagoya-city Aichi-prefecture (JP)
(72) Inventor: Saito, Makoto, Nagoya-city, Aichi-pref. (JP); Yamada, Hiyoshi, Iwakura-city, Aichi-pref. (JP); Kasai, Yasuaki, No. 401 Glorious Narumi, Midori-ku, Nagoya-city, Aichi-pref. (JP); Yoshikawa, Norio, Nakagawa-ku, Nagoya-city, Aichi-pref. (JP)
(74) Representative: Jenkins, Peter David

(56) References cited:
- EP-A- 0 215 450
- GB-A- 2 151 084
- PATENT ABSTRACTS OF JAPAN vol. 11, no. 122 (E-500) (2569) 16 April 1987 & JP-A-61 269 651 (FUJI ELECTRIC CO LTD.) 29 November 1986
- PATENT ABSTRACTS OF JAPAN vol. 16, no. 154 (E-1190) 15 April 1992 & JP-A-04 008 138 (HITACHI LTD.) 13 January 1992

## Description

This invention relates to a rotor used for motors such as an AC servomotor, brushless motor or the like, and more particularly to a rotor provided with a rare earth metal-iron type ring-shaped magnet.

Heretofore, a rotor provided with a magnet has been used in motors such as an AC servomotor, brushless motor or the like. In those rotors, the magnet is commonly made by combining a plurality of arc-shaped divided magnet segments in a circumferential direction. As the magnet, rare earth metal-iron type magnets having good magnetic properties have predominantly been used.

When a plurality of such arc-shaped divided magnet segments are assembled on a rotor body to provide a rotor, the assembling efficiency of the divided magnet segments on the rotor body is good, but the formation of the magnetic pole is dependent upon the shape of the magnet divided into arcs or the like.

To this end, it has been attempted to set the magnetic pole by using a ring-shaped rare earth metal-iron type magnet without any divisions into arcs or the like.

However, when such a ring-shaped rare earth metal-iron type magnet is assembled on the rotor body, the thermal expansion coefficient of the ring-shaped rare earth metal-iron type magnet is small, while the thermal expansion coefficient of the rotor body (e.g. made from S45C, SUS403, Al or the like) is large, so that if the temperature of the rotor rises, the thermal expansion of the rotor body is greater than that of the ring-shaped rare earth metal-iron type magnet, and hence cracking or fracture of the ring-shaped rare earth metal-iron type magnet undesirably occurs.

In order to solve this problem, the formation of a large gap between the rotor body and ring-shaped rare earth metal-iron type magnet or the insertion of an adhesive into such a large gap has been proposed. In those arrangements, however, the concentric accuracy between the rotor body and the ring-shaped rare earth metal-iron type magnet may be reduced due to the formation of the large gap or the degradation of the adhesive, such that these arrangements are not effective.

Further, in order to prevent scattering of broken ring-shaped rare earth metal-iron type magnet and to improve the corrosion resistance of the rare earth metal-iron type magnet having *per se* a poor corrosion resistance in a motor requiring a high reliability, a coating for the prevention of scattering and an improvement of the corrosion resistance may be arranged around the outer peripheral surface of the ring-shaped magnet. However, when the thermal expansion coefficient of the coating is large, if the rotor is placed in a low-temperature environment, the thermal shrinkage of the coating becomes greater than that of the ring-shaped rare earth metal-iron type magnet, and hence cracking or fracture of the ring-shaped rare earth metal-iron type magnet occurs.

GB-A-2151084 discloses a rotor comprising an outer magnetic ring connected to a shaft by a composite intermediate connecting means. The connecting means has a low thermal coefficient of volumetric expansion and includes a metallic member and at least one body of synthetic resin.

JP-A-04008138 discloses a rotor comprising a rotor body, a ring-shaped magnet arranged around the rotor body and a reinforcing member arranged on the outer peripheral surface of the ring-shaped magnet.

It is therefore an aim of the invention to solve the aforementioned problems of the conventional techniques and to provide a rotor capable of sufficiently maintaining the concentric accuracy between the rotor body and the ring-shaped rare earth metal-iron type magnet and provide good corrosion resistance of the magnet over a long period without causing cracking or fracture of the magnet even if the temperature of the rotor rises or the rotor is placed in a low-temperature environment.

Accordingly, the present invention provides a rotor comprising a rotor body and a ring-shaped rare earth metal-iron type magnet arranged therearound; characterized in that a low thermal-expansion material having a lower coefficient of thermal expansion than that of said rotor body is disposed between said rotor body and said ring-shaped magnet.

Preferably, said rotor further comprises a reinforcing member arranged on the outer peripheral surface of the ring-shaped rare earth metal-iron type magnet, said reinforcing member being composed of a low thermal-expansion material having a lower coefficient of thermal expansion than that of said rotor body.

Preferred embodiments of the present invention will now be described hereinbelow by way of example only with reference to the accompanying drawings, in which:
Fig. 1 is a diagrammatic sectional view of a first embodiment of a rotor provided with a ring-shaped magnet according to the invention;
Fig. 2 is a diagrammatic sectional view of a first comparative embodiment of a rotor provided with a ring-shaped magnet;
Fig. 3 is a diagrammatic sectional view of a second embodiment of a rotor provided with a ring-shaped magnet according to the invention; and
Fig. 4 is a diagrammatic sectional view of a second comparative embodiment of a rotor provided with a ring-shaped magnet.

In the rotor provided with a ring-shaped rare earth metal-iron type magnet according to the invention, carbon steel, low alloy steel, stainless steel and the like are used as a rotor body. For example, S45C as a carbon steel and SUS403 as a martensitic stainless steel can be used. Further, aluminium material may be used. Most of these materials have a thermal expansion coefficient of about 8-25 x 10⁻⁶ /°C, more particularly about 10-20 x 10⁻⁶/°C.

As the rare earth metal-iron type magnet, there used R-Fe system, R-Fe-B system, R-Fe-N system and the like (R is one or more of rare earth metal elements), in which Ni, Mn and Co are included in Fe and a proper element may be included in B or used instead of B, for example, at least one of C, N, P, Si. A greater part of these systems have a thermal expansion coefficient of not more than about 3 x 10⁻⁶/°C (including minus coefficient).

As the low thermal-expansion material, there are used Fe-Ni system, Fe-Ni-Co system, Fe-B system, Fe-Cr-B system and the like. A greater part of these systems have a thermal expansion coefficient of not more than about 5 x 10⁻⁶/°C (including minus coefficient). Specifically, there are Fe-36% Ni (Invar), Fe-29% Ni-17% Co (Kovar), Fe-42% Ni and the like.

In the rotor according to the invention, a low thermal-expansion material is disposed between the rotor body and the ring-shaped magnet, so that the magnetic pole can be easily set at an optional position, while even when the temperature of the rotor rises and a difference in thermal expansion between the rotor body and the ring-shaped magnet occurs, the thermal expansion difference is accommodated by the low thermal-expansion material. Therefore, cracking or fracture of the ring-shaped magnet based on the difference of thermal expansion coefficient between the rotor body and the ring-shaped magnet is prevented.

In a preferred embodiment of the invention, a low thermal-expansion material is further arranged on the outer peripheral surface of the ring-shaped magnet, so that even when the rotor is in a low-temperature environment, the difference in thermal shrinkage between the ring-shaped magnet and the low thermal-expansion outside material is small. Therefore, cracking and fracture of the ring-shaped magnet is prevented. Furthermore, even if the ring-shaped magnet is broken, scattering of the broken magnet is prevented by the low thermal-expansion outside material. Moreover, the corrosion resistance of the ring-shaped magnet having *per se* a poor corrosion resistance can satisfactorily be maintained over a long period.

The following Examples are given in illustration of the invention and are not intended as limitations thereof.

### Example 1

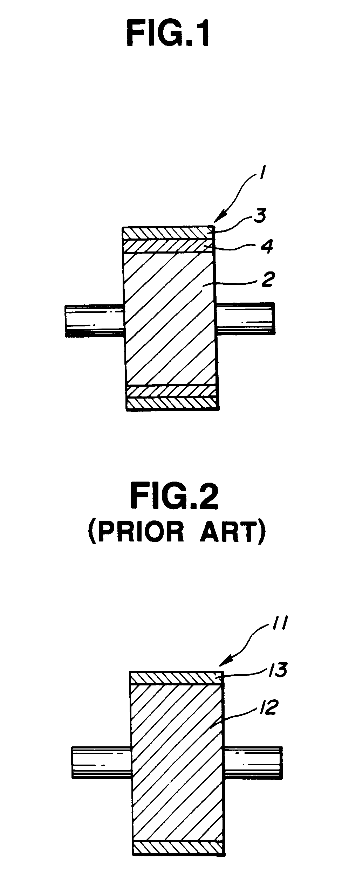

Fig. 1 shows a first embodiment of a rotor provided with a ring-shaped magnet according to the invention, in which numeral 1 designates a rotor, numeral 2 designates a rotor body, numeral 3 designates a ring-shaped rare earth metal-iron type magnet and numeral 4 designates a low thermal-expansion inside material disposed between the rotor body 2 and the ring-shaped magnet 3.

The rotor body 2 is made from a carbon steel of S45C, in which a large-diameter portion has a width of 30 mm and an outer diameter of 42.95 mm.

Furthermore, the ring-shaped rare earth metal-iron type magnet 3 is made from 28 wt% Nd-2 wt% Dy-0.9 wt% B-3 wt% Co-remainder being Fe, and has a width of 30 mm, an outer diameter of 60 mm and an inner diameter of 54 mm.

In addition, the low thermal-expansion inside material 4 is made from 36 wt% Ni-remainder being Fe, and has a width of 30 mm, an outer diameter of 53.95 mm and an inner diameter of 43 mm.

The low thermal-expansion inside material 4 is bonded to the rotor body 2 through an adhesive (trade name: Locktite 325UV), while the ring-shaped rare earth metal-iron type magnet 3 is bonded to the low thermal-expansion inside material 4 through the same adhesive as mentioned above, whereby the rotor 1 according to the invention is formed.

No cracking of the ring-shaped rare earth metal-iron type magnet 3 was observed after heating the rotor 1 to 200°C.

### Comparative Example 1

Fig. 2 shows a first comparative embodiment of the rotor, in which numeral 11 designates a rotor, numeral 12 designates a rotor body and numeral 13 designates a ring-shaped rare earth metal-iron type magnet.

The rotor body 12 is made from a carbon steel of S45C, in which a large-diameter portion has a width of 30 mm and an outer diameter of 53.95 mm.

Furthermore, the ring-shaped rare earth metal-iron type magnet 13 is made from 28 wt% Nd-2 wt% Dy-0.9 wt% B-3 wt% Co-remainder being Fe, and has a width of 30 mm, an outer diameter of 60 mm and an inner diameter of 54 mm.

The ring-shaped rare earth metal-iron type magnet 13 is bonded to the rotor body 12 through an adhesive (trade name: Locktite 325UV) to form the rotor 11.

In heating the rotor 11 to 200°C, cracking of the ring-shaped rare earth metal-iron type magnet 13 was observed on reaching 110°C.

### Example 2

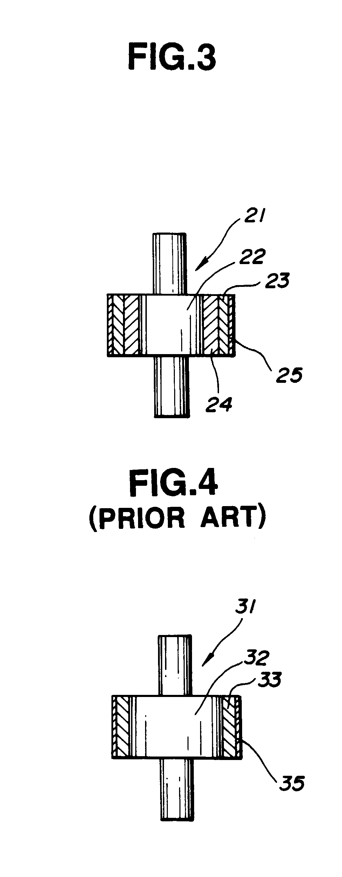

Fig. 3 shows a second embodiment of a rotor provided with a ring-shaped magnet according to the invention, in which numeral 21 designates a rotor, numeral 22 designates a rotor body, numeral 23 designates a ring-shaped rare earth metal-iron type magnet, numeral 24 designates a low thermal-expansion inside material disposed between the rotor body 22 and the ring-shaped magnet 23 and numeral 25 designates a low thermal-expansion outside material arranged on the outer peripheral surface of the ring-shaped magnet 23.

The rotor body 22 is made from a carbon steel of S45C, in which a large-diameter portion has a width of 20 mm and an outer diameter of 23 mm.

Furthermore, the ring-shaped rare earth metal-iron type magnet 23 is made from 28 wt% Nd-2 wt% Dy-0.8 wt% B-3 wt% Co-0.5 wt% Mo-0.1 wt% Ta-0.1 wt% C-remainder being Fe, and has a width of 20 mm, an outer diameter of 40 mm and an inner diameter of 33 mm.

In addition, the low thermal-expansion inside material 24 is made from 42 wt% Ni-remainder being Fe, and has a width of 20 mm, an outer diameter of 33 mm and an inner diameter of 23 mm.

Moreover, the low thermal-expansion outside material 25 is made from 36 wt% Ni-remainder being Fe, and has a width of 20 mm, an outer diameter of 42 mm and an inner diameter of 40 mm.

The low thermal-expansion inside material 24 is bonded to the rotor body 22 through an adhesive (trade name: Locktite 334UV). The ring-shaped rare earth metal-iron type magnet 23 is bonded to the low thermal-expansion inside material 24 through the same adhesive as mentioned above. The low thermal-expansion outside material 25 is also bonded to the ring-shaped magnet 24 through the same adhesive as mentioned above, whereby the rotor 21 according to the invention is formed.

After holding the rotor 21 in a thermostatic chamber heated to 200°C for 1 hour and then in a thermostatic chamber cooled to -40°C for 1 hour, no cracking of the ring-shaped rare earth metal-iron type magnet 23 was observed.

### Comparative Example 2

Fig. 4 shows a second comparative embodiment of the rotor, in which numeral 31 designates a rotor, numeral 32 designates a rotor body, numeral 33 designates a ring-shaped rare earth metal-iron type magnet and numeral 35 designates a coating arranged outside the ring-shaped magnet 33 for the prevention of scattering and an improvement in corrosion resistance.

The rotor body 32 is made from a carbon steel of S45C, in which a large-diameter portion has a width of 20 mm and an outer diameter of 33 mm.

Furthermore, the ring-shaped rare earth metal-iron type magnet 33 is made from 28 wt% Nd-2 wt% Dy-0.8 wt% B-3 wt% Co-0.5 wt% Mo-0.1 wt% Ta-0.1 wt% C-remainder being Fe, and has a width of 20 mm, an outer diameter of 40 mm and an inner diameter of 33 mm.

Moreover, the coating 35 is made from a ferritic stainless steel of SUS430, and has a width of 20 mm, an outer diameter of 42 mm and an inner diameter of 40 mm.

The ring-shaped rare earth metal-iron type magnet 33 is bonded to the rotor body 32 through an adhesive (trade name: Locktite 334UV), while the coating 35 is bonded to the ring-shaped magnet 33 through the same adhesive as mentioned above to form the rotor 31.

After holding the rotor 31 in a thermostatic chamber heated to 200°C for 1 hour and then in a thermostatic chamber cooled to -40°C for 1 hour, cracking of the ring-shaped rare earth metal-iron type magnet 33 was observed at three positions in a cylindrical axial direction.

As mentioned above, according to the invention, the low thermal-expansion inside material is disposed between the rotor body and the ring-shaped rare earth metal-iron type magnet in the rotor, so that the magnetic pole can be easily set at an optional position, while even if the temperature of the rotor rises and a difference in thermal expansion between the rotor body and the ring-shaped magnet occurs, the thermal expansion difference is accommodated by the low thermal-expansion inside material. Therefore, cracking or fracture of the ring-shaped magnet due to a difference in thermal expansion coefficient between the rotor body and the ring-shaped magnet does not occur and hence the concentric accuracy of the ring-shaped magnet to the rotor body can fully be maintained over a long time.

When a low thermal-expansion outside material is arranged on the outer peripheral surface of the ring-shaped magnet the difference in thermal shrinkage between the ring-shaped magnet and the low thermal-expansion outside material is small even when the rotor is placed in a low-temperature environment. Therefore, cracking and fracture of the ring-shaped magnet can be prevented. Even if the ring-shaped magnet is broken, scattering of the broken magnet can be prevented by the low thermal-expansion outside material. Furthermore, the corrosion resistance of the ring-shaped magnet having *per se* a poor corrosion resistance can satisfactorily be maintained over a long period.

As a result, the rotors according to the invention can be used in AC servomotors and the like while sufficiently utilizing the merits of a ring-shaped magnet capable of optionally setting the magnetic pole.

## Claims

1. A rotor comprising a rotor body (2; 22) and a ring-shaped rare earth metal-iron type magnet (3; 23) arranged therearound; characterized in that a low thermal-expansion material (4; 24) having a lower coefficient of thermal expansion than that of said rotor body (2; 22) is disposed between said rotor body (2; 22) and said ring-shaped magnet (3; 23).

2. The rotor according to claim 1, further comprising a reinforcing member (25) arranged on the outer peripheral surface of the ring-shaped rare earth metal-iron type magnet (23), said reinforcing member (25) being composed of a low thermal-expansion material having a lower coefficient of thermal expansion than that of said rotor body (22).

3. The rotor according to claim 1 or 2, wherein said rotor body (2; 22) has a thermal expansion coefficient of 8-25 x 10⁻⁶/°C, said ring-shaped magnet (3; 23) has a thermal expansion coefficient of not more than 3 x 10⁻⁶/°C, and said low thermal-expansion material (4; 24) has a thermal expansion coefficient of not more than 5 x 10⁻⁶/°C.

4. The rotor according to claim 1 or 2, wherein said rotor body (2; 22) has a thermal expansion coefficient of 10-20 x 10⁻⁶/°C, said ring-shaped magnet (3; 23) has a thermal expansion coefficient of not more than 3 x 10⁻⁶/°C, and said low thermal-expansion material (4; 24) has a thermal expansion coefficient of not more than 5 x 10⁻⁶/°C.

## Patentansprüche

1. Rotor mit einem Rotorkörper (2;22) sowie einem darum angeordneten Magneten (3;23) des Seltenerdenmetall-Eisen-Typs; dadurch gekennzeichnet, daß ein Material (4;24) mit niedriger thermischer Volumenausdehnung, das einen geringeren thermischen Volumenausdehnungskoeffizienten aufweist als dieser Rotorkörper (2;22), zwischen diesem Rotorkörper (2;22) und diesem ringförmigen Magneten (3;23) angeordnet ist.

2. Rotor nach Anspruch 1, des weiteren aufweisend ein Verstärkungselement (25), das an der äußeren Randoberfläche des ringförmigen Magnetens (23) des Seltenerdenmetall-Eisen-Typs angeordnet ist, wobei dieses Verstärkungselement (25) aus einem Material mit geringer thermischer Volumenausdehnung besteht, das einen geringeren thermischen Volumenausdehnungskoeffizienten aufweist als der Rotorkörper (22).

3. Rotor nach Anspruch 1 oder 2, worin dieser Rotorkörper (2;22) einen thermischen Volumenausdehnungskoeffizienten von 8-25 x 10⁻⁶/°C aufweist, dieser ringförmige Magnet (3;23) einen thermischen Volumenausdehnungskoeffizienten aufweist von nicht mehr als 3 x 10⁻⁶/°C und wobei dieses Material (4;24) mit geringer thermischer Volumenausdehnung einen thermischen Volumenausdehnungskoeffizienten aufweist von nicht mehr als 5 x 10⁻⁶/°C.

4. Rotor nach Anspruch 1 oder 2, worin dieser Rotorkörper (2;22) einen thermischen Volumenausdehnungskoeffizienten von 10-20 x 10⁻⁶/°C aufweist, dieser ringförmige Magnet (3;23) einen thermischen Volumenausdehnungskoeffizienten von nicht mehr als 3 x 10⁻⁶/°C aufweist und wobei dieses Material (4;24) mit geringer thermischer Volumenausdehnung einen thermischen Volumenausdehnungskoeffizienten aufweist von nicht mehr als 5 x 10⁻⁶/°C.

## Revendications

1. Rotor comprenant un corps de rotor (2 ; 22) et un aimant (3 ; 23) de type au fer et aux métaux des terres rares, de forme annulaire agencé autour de celui-ci ; caractérisé en ce qu'une matière à faible dilatation thermique (4 ; 24), ayant un coefficient de dilatation thermique plus bas que celui dudit corps de rotor (2 ; 22) est disposée entre ledit corps de rotor (2 ; 22), et ledit aimant (3 ; 23) de forme annulaire.

2. Rotor selon la revendication 1, comprenant en outre un élément de renforcement (25) agencé sur la surface périphérique extérieure de l'aimant (23) de type au fer et aux métaux des terres rares, de forme annulaire, ledit élément de renforcement (25) étant composé d'une matière à faible dilatation thermique à coefficient de dilatation thermique inférieur à celui dudit corps de rotor (22).

3. Rotor selon la revendication 1 ou 2, dans lequel ledit corps de rotor (2 ; 22) a un coefficient de dilatation thermique de 8 à 25 x 10⁻⁶/°C, dans lequel ledit aimant (3 ; 23) de forme annulaire a un coefficient de dilatation thermique d'au plus 3 x 10⁻⁶/°C, et dans lequel ladite matière à faible dilatation thermique (4 ; 24) a un coefficient de dilatation thermique d'au plus 5 x 10⁻⁶/°C.

4. Rotor selon la revendication 1 ou 2, dans lequel ledit corps de rotor (2 ; 22) a un coefficient de dilatation thermique de 10 à 20 x 10⁻⁶/°C, ledit aimant (3 ; 23) de forme annulaire a un coefficient de dilatation thermique d'au plus 3 x 10⁻⁶/°C, ladite matière à faible dilatation thermique (4 ; 24) a un coefficient de dilatation thermique d'au plus 5 x 10⁻⁶ / °C.
